# EUROPEAN PATENT SPECIFICATION

(11) **EP 0 727 565 B1**
(45) Date of publication and mention of the grant of the patent: **17.05.2000**
(21) Application number: 96102384.3
(22) Date of filing: 16.02.1996
(51) Int. Cl.: F01L 3/22, B23C 3/05

(54) **A valve seat structure and a method of manufacturing same**
Eine Ventilsitzanordnung und ein Verfahren zu ihrer Herstellung
Une structure de siège de soupape et une méthode pour sa réalisation

(30) Priority: 16.02.1995 JP 2821795
(43) Date of publication of application: 21.08.1996
(73) Proprietor: YAMAHA HATSUDOKI KABUSHIKI KAISHA, Iwata-shi Shizuoka-ken, 438 (JP)
(72) Inventor: Adachi, Shuhei, c/o Yamaha Hatsudoki K.K., Iwata-shi, Shizuoka-ken (JP); Sakai, Hiroyuki, c/o Yamaha Hatsudoki K.K., Iwata-shi, Shizuoka-ken (JP)
(74) Representative: Grünecker, Kinkeldey, Stockmair & Schwanhäusser Anwaltssozietät

(56) References cited:
- EP-A- 0 064 367
- EP-A- 0 092 683
- EP-A- 0 228 282
- DE-A- 3 613 299
- DE-A- 3 928 597
- DE-A- 4 322 435
- US-A- 4 831 976
- US-A- 4 896 638

## Description

This invention relates to a method of manufacturing a valve seat structure in a valve opening of a cylinder head, comprising the features of the preamble portion of claim 1. Further, the invention also relates to a valve structure in a valve opening of a cylinder head, comprising the features of the preamble of claim 11.

Concave combustion areas composing the combustion chamber are shaped in the cylinder heads of engines at the surface which mates to the cylinder block; openings for the air intake valves and exhaust valves are shaped in these concave areas, and air intake ports and exhaust ports leading the outside are connected to these respective openings, and air intake or exhaust valves open and close said openings.

Valve seats are shaped on each of the foregoing openings and assure a tight seal for the air intake and exhaust valves when they are in contact. The usual structure for these valve seats is to have a second tapered surface (valve seat surface) which is conventionally at a 90° opening angle with respect to the valve stem and, continuing from this on the upstream and downstream sides are a first tapered surface (upstream side guide tapered surface) and third tapered surface (downstream guide tapered surface) conventionally formed at opening angles of 30 and 120° respectively.

To shape the first through third tapered surfaces in this manner, in the prior art, a 30° cutting tool, 90° cutting tool and 120° cutting tool is affixed concentrically in a cutting tool holder, and first, the 30° and 120° tools are advanced to shape the first and the third tapered surfaces simultaneously, and then, both tools are drawn back 0.2 to 1 mm, and in this state, the 90° tool is advanced to shape the second tapered surface.

On the one hand, since the foregoing valve seats must be highly wear resistant to stand up to the seating of the valves, further highly heat resistant to withstand the high gas temperatures, and evince good sealing properties, they are composed of a metal layer that is different from the metal used for the cylinder head stock. The methods of shaping this heterogeneous metal layer include press fitting the seat rings made from a sintered ferrous material around the valve openings, or passing electric current through them while applying pressure to the seat rings to weld them in place (see Japan Patent Application Disclosures Hei 5-336657 and Hei 4-114220). After the layer of heterogeneous metal is formed using either of the foregoing methods, it is necessary to use a cutting tool to shape the valve seat surface, the guide tapered surface, etc., as was described above.

In valve seats with the above described structure, a guide tapered surface is shaped into the side of the foregoing valve seat surface that is closer to the mating surface with the cylinder block that serves as a guide for the inflow of intake air and the expulsion of exhaust gases, and in response to recent demand for higher engine output, there is demand for a valve seat structure which increases the exchange efficiency of the foregoing air intake and exhaust gases.

Furthermore, in machining the valve seat structure in the prior art using the 90° tool to shape the second tapered surface (valve seat surface), there is a problem with nicks or cracks developing during the machining process which may cause the product to be defective. In addition, pitching of the foregoing tool itself could occur, and there is the further problem of the resulting short tool longevity.

At this point, after evaluating the cause for the above described nicks or cracking, it was found that during the cutting using the 90° tool, contact was being made by the 120° tool with the machined surface of the third tapered surface, and the vibrations from this contact were being transmitted to the 90° tool.

In addition, when doing the finishing machining on the foregoing first and third tapered surfaces, it was necessary to perform high accuracy machining of the same tapered surface using the same cutting tool, under the same cutting conditions for both the cylinder head stock and the layer of different metal--two completely different materials. However, when the cutting of a tapered surface is performed at the same time on two types of materials with differing hardness, it is very difficult to make the proper tool selection, to select the proper cutting conditions and to achieve the desired machining accuracy. Further, the selection of the foregoing conditions may lead to pitching on the cutting tool. In the case described above where the layer of heterogeneous metal is welded in place, an intermediate layer of material is formed at the border between the two types of material where atoms from each material are dispersed. There are also cases where minute voids are formed in this intermediate layer, and these cause starts and stops in the cutting of the tool which makes it more prone to pitching.

Another method and valve structure as mentioned at the beginning is known from EP-A-228 282.

Accordingly, it is an objective of the present invention to provide an improved method of manufacturing a valve seat structure as indicated above which always assures the production of reliable valve seats and simultaneously improves the machining accuracy of tapered surfaces on a plurality of materials.

It is a further objective of the present invention to provide an improved valve seat structure as indicated above having an enhanced gas exchange efficiency.

According to the invention, this objective is solved by the method of claim 1.

According to the invention, this further objective is solved by a valve seat structure comprising the features of claim 11.

In order to reduce the possibility that a cutting tool for cutting the first to third tapered surfaces contacts the mating surface adjacent to said valve opening, it is advantageous that simultaneously with said step of shaping the second tapered surface, the diameter of said mating surface adjacent to said valve opening is increased.

By providing said valve seat surface in a position where only said seat ring or layer material is present, nicking or pitching during the machining process of said tapered surface is eliminated.

According to a further embodiment of the invention, said first tapered surface and/or said third tapered surface has axial lengths comprising a first or third length only occupying said seat ring or layer material and a second or fourth length only occupying said cylinder head material, whereby said second and/or fourth lengths occupy more than 50% of said axial lengths.

Said seat ring or layer may be attached by using a welding method by applying pressure of an electrical currant to said seat ring or layer, or a laser clad method or a molding injection method.

When the welding method is used, it is advantageous when the cross-section of said valve seat material is triangularly shaped, one corner of which is directed to said cylinder head.

Other preferred embodiments of the present invention are laid down in further dependent claims.

By a structure of valve seats on cylinder heads according to an embodiment of the invention in addition to the guide tapered surface on the cylinder block side, a second guide tapered surface with an opening angle greater than said guide tapered surface is formed, so that when a valve lifts, the intake air flow traversing the gap between the valve's sealing surface and the valve seat is decelerated due to the second guide tapered surface with a larger angle, thereby causing the intake air not to separate from the inside concave surface of the combustion chamber and be smoothly introduced therein. The forming of the second guide tapered surface also smoothes the flow of the exhaust gases and thereby improves the gas exchange efficiency.

According to a further embodiment of the invention, the boundary between the cylinder head stock and the layer of heterogeneous metal for the valve seat is located inside the guide tapered surface or in the second guide tapered surface, and moreover, the area for one or the other of the foregoing layer of heterogeneous metal or cylinder stock material is set to exceed 50% of the area of said tapered surface. In addition, according to the invention of Claim 3, the area of one or the other of the foregoing layer of heterogeneous metal or the cylinder head stock exceeds 50% of the area of said guide tapered surface; in other words, one or the other of the areas is set to be larger, and the cutting conditions for the tool are set based upon the material occupying the larger area, thereby enabling the machining accuracy to be improved, and the pitching of the tool to be prevented.

In addition, according to another embodiment, even when welding methods involving pressure and electrical heating are employed to install the layer of heterogeneous metal, the shaping of the second guide tapered surface improves the gas exchange efficiency, and the machining accuracy is improved by making the area of one or the other metal larger.

In the following, the present invention is explained in greater detail with respect to several embodiments thereof in conjunction with the accompanying drawings, wherein:
Figure 1 is a section diagram illustrating the valve seat structure of a first embodiment;
Figure 2 is a process diagram of the machining method for the valve seat area of the foregoing embodiment;
Figure 3 is a continuation of the process diagram of Figure 2;
Figure 4 is a further diagram illustrating the machining method for the valve seat area of the foregoing embodiment;
Figure 5 is another diagram illustrating the machining method for the valve seat area of the foregoing embodiment;
Figure 6 is a still further diagram illustrating the machining method for the valve seat area of the foregoing embodiment;
Figure 7 is a diagram showing the cutting tool holder used in the machining method for the foregoing embodiment;
Figure 8 is a sectional view of a cylinder head comprising the valve seat of the foregoing embodiment; and
Figure 9 is a bottom view of a cylinder head comprising the valve seat of the foregoing embodiment.

An embodiment of the present invention with be described below based on the attached figures.

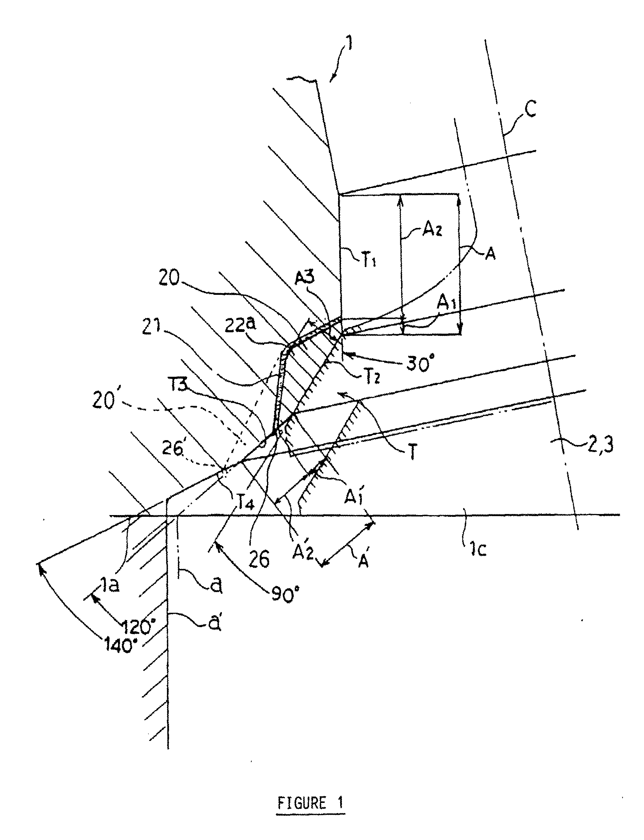

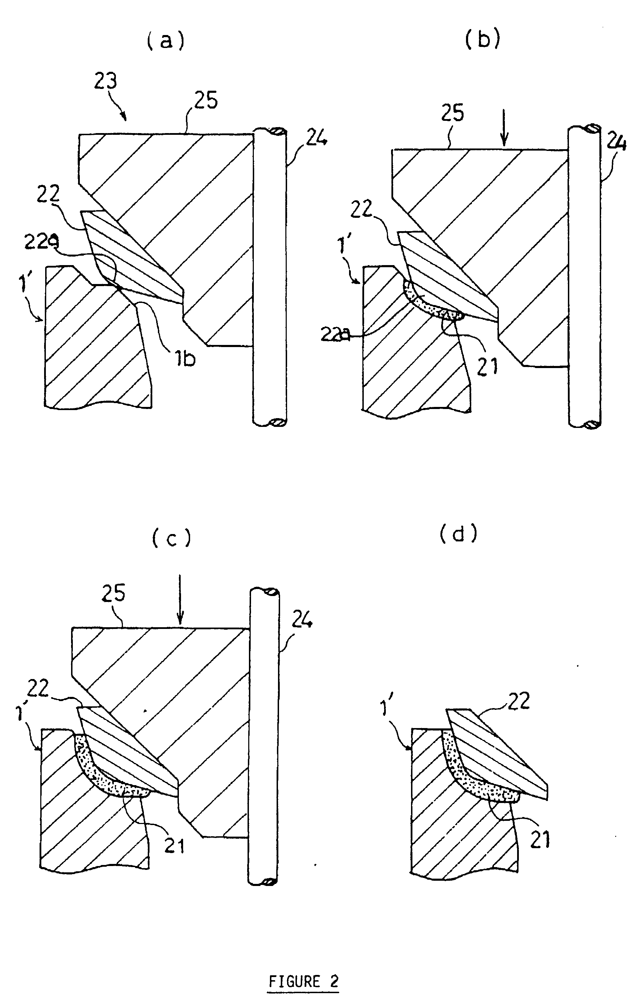

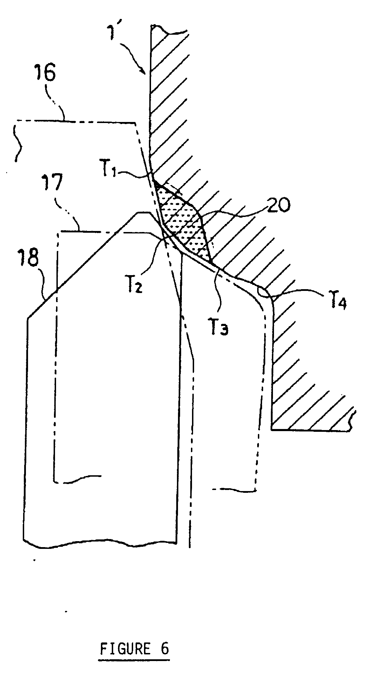

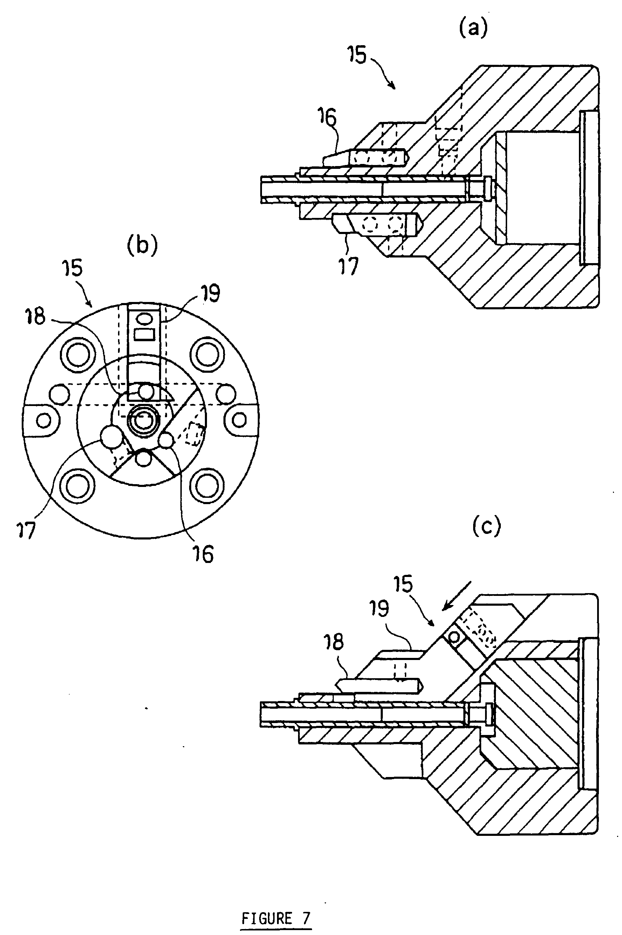

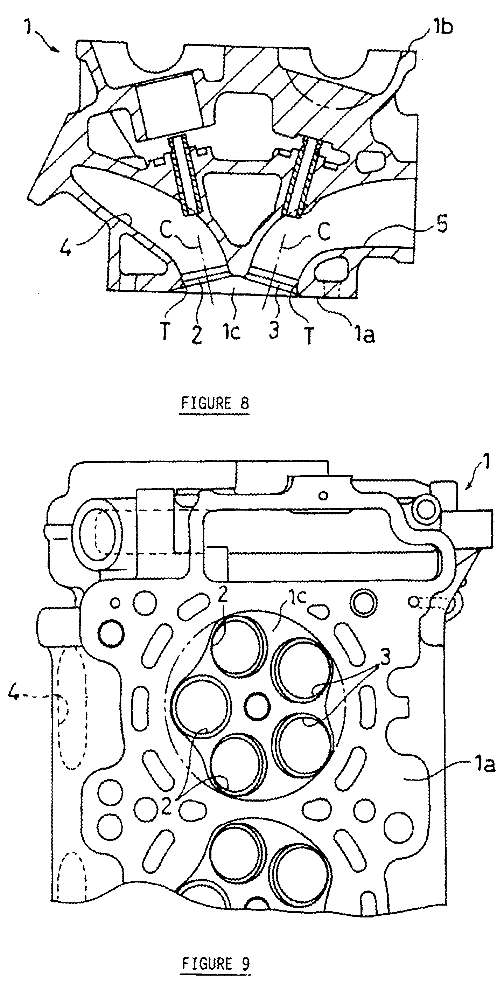

Figures 1 through 9 will be used to explain the valve seat structure on a cylinder head of a first embodiment. Figure 1 is a sectional view showing a valve seat area, Figures 2 through 6 are process diagrams to explain the machining process of the valve seat, Figures 7 (a)-(c) show the cutting tool holder used for the respective foregoing cutting methods, and Figures 8 and 9 show sectional and bottom views of a cylinder head.

In Figures 8 and 9, 1 represents a die cast aluminum cylinder head evincing the valve seats structure of this embodiment, and an omitted cylinder block is present beneath said cylinder heads 1 bottom mating surface (the side that mates with the cylinder unit) 1a. A cylinder head cover is attached to the top mating surface 1b. Concave combustion areas 1c that compose the combustion chamber are shaped on the bottom mating surface 1a of the cylinder head 1. Three air intake valve openings 2 and two exhaust valve openings 3 are shaped in each of said concave areas 1c. These air intake valve openings 2 are connected by an air intake port 4 to the wall on one side of the cylinder head, and the exhaust valve openings are connected by the exhaust port 5 to the other side wall.

In the present embodiment, the valve seat material (layer of heterogeneous metal) has been shaped around the circumferences of the air intake valves 2 and the exhaust valves 3 of the cylinder head 1 by resistance welding, and will be described with respect to an intake valve 2. A second tapered surface (valve seat surface) T2 with an opening angle of 90° with respect to the axis C of the valve shaft is shaped into said valve seat material 20, and, in addition, a first tapered surface T1 on the upstream side with an opening angle of 30°, and a third tapered surface (guide tapered surface) located on the downstream side with an opening angle of 120°, further, continuing from this third tapered surface T3 is a fourth tapered surface (second guide tapered surface) T4 with an opening angle of 140°.

The foregoing valve seat material 20 consists of seat rings that have been pressed into the valve openings and welded into place by heating with an electrical current. This feature causes the formation of an intermediate layer 21 of plastically deformed cylinder head stock between the valve seat material 20 and the cylinder head stock.

Here, the entirety of the foregoing second tapered surface T2 is composed of the foregoing valve seat material 20. On the other hand, with regard to the foregoing first and third tapered surfaces T1, T3, just a small part is composed of the valve seat material 20, while the remainder (most) is composed of the cylinder head stock. In other words, the ratios A2/A, A2'/A' of the inside circumferential area composed of the cylinder head stock for the foregoing first tapered surface T1 and third tapered surface T3 to the entire inside circumferential area of these tapered surfaces exceeds 50%, and indeed, is approximately 90%. By occupying more than 50% of the total area of the inside circumferential area of the tapered surfaces with cylinder head stock, it is possible to optimize cutting conditions for the tool on that basis and thereby improve the machining accuracy and prolong tool longevity.

To rephrase again, the ratios A1/A, A1'/A' of the area of the seat material 20 that occupies the total inside circumferential area of the first and third tapered surfaces T1, T3 is kept low. In this case, the width-dimensions of the valve seat material A1, A1' are under 1 mm, specifically, they range approximately from 0.3 to 0.5 mm so that the thickness A3 of the valve seat material is about 0.5 mm.

As is shown in Figure 1, the cross-section of the foregoing valve seat material is approximately triangular, but as will be described later, this feature results from using the welding method as the method of manufacture.

Then, toward the lower mating surface la side of the foregoing air intake openings 2 and exhaust openings 3, there is a machined relief surface *a*' with a diameter larger than that of the guide machined surface *a*, which corresponds to the rotational diameter of the tool used on the a fourth tapered surface (second guide tapered surface) T4 that comprises an opening angle greater than that of the third tapered surface T3. Specifically, the opening angle for T4 is set at 140°, and the machined surface *a*' is set to be about 0.6 mm larger than the diameter of the machined surface *a* for the 120° C opening angle (see Figure 1). Thus, by shaping the fourth tapered surface (second guide tapered surface) T4 and the machined relief surface *a*', it is possible to prevent the formation of nicks and cracks while machining the foregoing valve seat material 20, and this feature further smoothes the inflow of intake air and outflow of exhaust gases to improve the gas exchange efficiency.

Next, further explanation will be given for the shaping method for the valve seat area that is characteristic of this invention.

The method of this invention involves an attachment process, preliminary machining process, and a machining process, and these will be described in order below.

### 1. The Attachment Process

First a flat surface and an a tapered attachment area 1b are shaped around the valve openings in the cylinder head stock 1' that was manufactured by aluminum die casting. Then, seat rings 22 (see Figure 2(a)), which are made from a sintered ferrous material with a Cu-plated surface treatment, are prepared. When viewed in horizontal cross-section, these seat rings 22 are triangular with an apex 22a. By using this apex area 22a, it is possible to increase the surface pressure on the cylinder head stock during the pressing operation to facilitate the plastic deformation of said stock.

Next, the foregoing seat rings 22 are positioned above the attachment areas 1b on the cylinder head stock 1', and a press jig 23 is set atop the seat rings (see Figure 2(a)). This press jig 23 roughly consists of a rod-shaped guide bar 24 to which an axially movable electrode 25 is attached, so that electricity can be passed through said electrode 25 while pressure is being applied to the seat ring 22. Then, while the foregoing apex area 22a is plastically deforming the attachment area 1b of the cylinder head stock 1', the seat ring 22 is buried (see Figure 2(b) and (c)), and this plastic deformation creates an intermediate layer 21 at the boundary between the cylinder head stock and the seat ring, and the seat ring 22 is attached to the cylinder head.

### 2. The Preliminary Machining Process

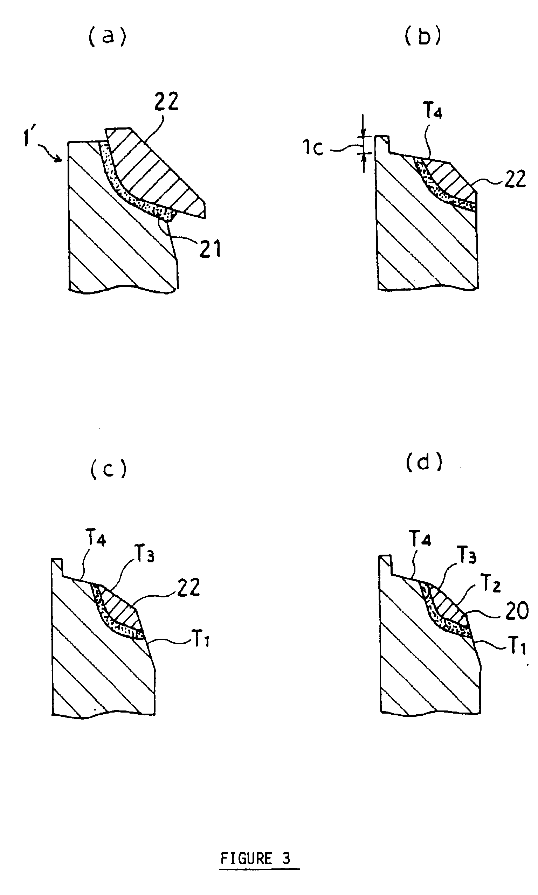

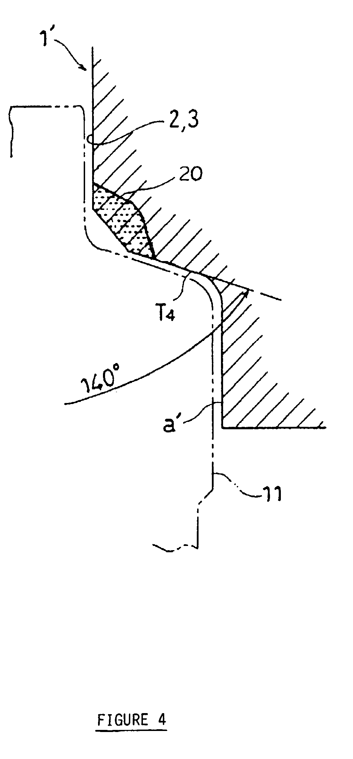

Then an end mill 11 is used on the seat ring areas 22 that were attached in the foregoing manner, to create the fourth tapered surface (second guide tapered surface) T4 at an opening angle of 140°, and the machined relief surface *a*' which is about 0.6 mm larger than the diameter of the machined surface *a* for the 120° machined surface (see Figure 3(a), 3(b) and Figure 4). In this case, it is possible to continuously cut the air intake and exhaust ports 2, 3 using the foregoing end mill 11. Further, it is desirable to make as shallow as possible the opening border 1c for the fourth tapered surface T4.

### 3. The Machining Process

As is shown in Figure 7(a)-(c), the cutting tool holder 15 used in this machining process comprises a main shaft apparatus (not shown) which is supported so that it may freely advance and recede, and a motor which rotates it. Cutting bits with the required angle are installed into said cutting tool holder 15: a 30° cutting bit 16, a 120° cutting bit 17, and a 90° cutting bit 18. Said 90° bit 18 comprises a feed member 19 which can move it in the axial direction with respect to the foregoing tool holder 15. In this case, in order to improve their resistance to wear, each of the cutting bits are CBN bits.

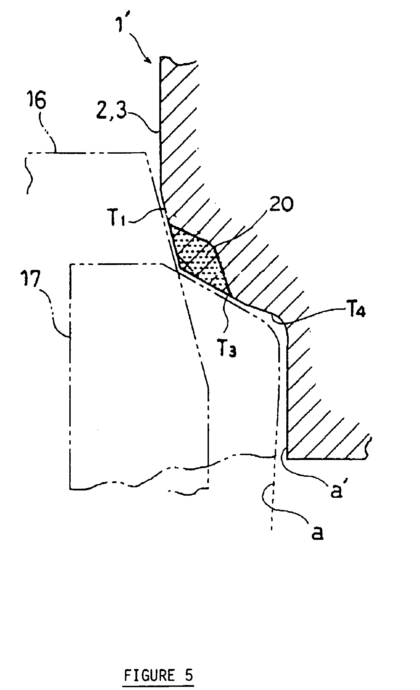

The cutting tool holder 15 is inserted into the openings 2, 3 of the cylinder head stock 1' with the foregoing feed member 19 in the retracted position, and initial plunge cutting is performed by advancing the 30° bit 16 and 120° bit 17 which simultaneously shapes the first tapered surface (the guide taper surface on the upstream side) T1, and the third tapered surface (the guide tapered surface on the downstream side) T3 (see Figure 3(c)). After this plunge cut, both bits 16, 17 are retracted 0.2mm (see Figure 5).

Next, the foregoing feed member 19 is advanced and the 90° bit 18 is used to perform a traverse cutting operation which shapes the second tapered surface T2. In this case, since there is about a 0.3 mm gap between the rotating diameter of the 120° bit and the machined relief surface *a*', no contact is made by the 120° bit 17 and the working of the 90° bit 18 proceeds smoothly. In this manner the valve seat areas T are shaped into the above mentioned cylinder head 1 (see Figure 1, Figure 3(d)).

Next the operational effects of the present embodiment will be explained.

The valve structure according to the present embodiment forms the forth tapered surface T4 in a preliminary stage to the machining of the first through third tapered surfaces T1-T3, hence no vibrations are transmitted to the 90° cutting bit 18 that would have normally resulted from contact with the machined surface from the 120° bit 17. As a result nicks and cracks to the valve seat material 20 can be prevented, and, by extension, the yields of the product and bit longevity can be thereby improved.

Further, in the present embodiment, since the fourth tapered surface T4 is shaped as a continuation from the foregoing third tapered surface T3, for example on the air intake valve side, the intake air flowing through the gap between the seal surface and the valve seat surface when the valve is lifted undergoes flow deceleration by an amount corresponding to the magnitude of the opening angle of the foregoing fourth tapered surface T4, and this feature inhibits the diversion of the air from the inside wall of the combustion chamber, resulting in a smoother flow of intake air. Also, on the exhaust valve side, the widening caused by the foregoing fourth tapered surface T4 smoothes the flow of the exhaust gases between the valve seat surface and the seal surface, resulting in improved efficiency in gas exchange.

Further, in the present embodiment, more that 50% of the area in the first and third tapered surfaces T1, T2, indeed, about 90%, is occupied by the cylinder head stock, and the machining conditions can be set appropriately for the cylinder head stock (which occupies the vast proportion of the area), which feature simplifies the bit selection and the cutting conditions for the machining of differing materials, and improves the machining accuracy, and in addition, prevents pitching of the bits and extends their longevity.

Since the area occupied by the valve seat material in the first and third tapered surfaces T1, T3 has been held to a low, approximate 10% value, it is possible to prevent separation of the valve seat material 20 during engine operations. To wit, the cylinder head stock, which is an aluminum alloy, evinces a vastly different coefficient of linear expansion than the valve seat material 20, which is a ferrous alloy. In this case, should the ferrous allow occupy a large area, a great deal of heat stress would build up at the interface between the two materials and make them more prone to separation. As a preventive measure, the present embodiment holds the ratio of the ferrous alloy seat material 20 to a low proportion, thereby diminishing the foregoing heat stress, and making separation less likely.

In the foregoing embodiment, the example explained the positioning of the interface area 26 between the cylinder head stock 1' and the valve seat material 20 inside the third tapered surface T3, but the invention is not limited to this condition. As is shown by the broken line in Figure 1, it is also possible to position the border 26' of the valve seat material 20' inside the fourth tapered surface T4. By so doing, the entire surface of the third tapered surface T3 is composed of the valve seat material 20'.

This type of structure allows preventing nicking during taper cutting with CBN bits, and extends bit longevity. Since an end mill was used to perform the machining for the foregoing fourth tapered surface T4, there is no great problem with nicking.

Further, the above example used a welding method involving the application of pressure and electrical current to bond the layer of heterogeneous metal, but the method of this invention may be equally well applied to using the laser clad method or the molten injection method for forming the layer of heterogeneous metal.

After the machining process, it is possible to carry out a finishing treatment to all of said tapered surfaces T1 to T4 or only to the first to third tapered surfaces T1 to T3.

According to the valve seat structure on cylinder heads as described above, a second guide tapered surface is shaped with a larger opening angle on the side of the mating surface with the cylinder block from the guide tapered surface, thus smoothing the air intake and exhaust gas flows to improve the gas exchange efficiency and to contribute to improved engine output.

According to another embodiment, the border between the cylinder head stock and the heterogeneous metal layer for the valve seat is positioned inside the guide tapered surface or second guide tapered surface, and moreover, either the cylinder head stock or the heterogeneous metal layer of the valve seat occupies more than 50% of the area of one of said tapered surfaces, and, according to a further embodiment, the foregoing boundary layer is positioned in the guide tapered surface, and in addition either of the heterogeneous metal layer or the cylinder head stock is made to occupy more than 50% of the area of said guide tapered surface, so that the bit selection and the cutting conditions for the machining can be set for the material that occupies most of the area. This feature improves the machining accuracy and prevents the pitching of the bits.

According to a still further embodiment, the heterogeneous metal layer is formed using pressure and current induced heat welding, wherein the shaping of a second guide tapered surface improves the gas exchange efficiency, and selecting either stock type with a larger area improves the machining accuracy.

## Claims

1. Method of manufacturing a valve seat structure at a valve opening of a cylinder head (1), said cylinder head being connectable to a cylinder block of an internal combustion engine, comprising the steps of
attaching at the valve opening a seat ring or layer made of a metal different from the cylinder head metal, and
machining said seat ring or layer and the cylinder head at said valve opening to form three tapered surfaces, a first tapered surface (T1), a second tapered surface (T2) and a third tapered surface (T3) of said valve seat structure,
**characterized in that**
another fourth tapered surface (T4) is machined in a first step before machining the said three tapered surfaces (T1,T2,T3) in a subsequent step,
said fourth tapered surface (T4) is provided on a side closer to the mating surface with the cylinder block, whereas with respect to an axis (C) of the valve opening the opening angle of the fourth tapered surface (T4) is larger than the opening angles of the remaining tapered surfaces (T1,T2,T3).

2. Method according to claim 1, **characterized in that** simultaneously with providing the fourth tapered surface (T4) the diameter of said mating surface adjacent to said valve opening is increased.

3. Method according to at least one of claims 1 to 2, **characterized in that** said first tapered surface (T1) and said third tapered surface (T3) are shaped simultaneously by one tool with respective cutting bits, then said cutting bits are retracted and a cutting bit attached to said same tool is advanced for shaping said second tapered surface (T2) which is a valve seat surface (T2).

4. Method according to claim 3, **characterized in that** said valve seat surface (T2) is provided in a position where only said seat ring or layer material is present.

5. Method according to at least one of claims 1 to 4, **characterized in tha**t said first tapered surface (T1) has an axial length (A) comprising a first length (A1) only occupying said seat ring or layer material and a second length (A2) only occupying said cylinder head material and that said lengths fulfill the following inequation:$\text{A2/A > 0,5.}$

6. Method according to at least one of claims 1 to 5, **characterized in that** said third tapered surface (T3) has an axial length (A') comprising a third length (A'1) only occupying said seat ring or layer material and a fourth length (A'2) only occupying said cylinder head material and that said lengths fulfill the following inequation:$\text{A'2/A' > 0,5.}$

7. Method according to at least one of claims 1 to 5, **characterized in that** said third tapered surface (T3) is provided in a position where only said seat ring or layer material is present.

8. Method according to at least one of claims 1 to 7, **characterized in that** said fourth tapered surface (T4) only occupies said cylinder head material.

9. Method according to at least one of claims 1 to 7, **characterized in that** said fourth tapered surface (T4) is provided at a position where the seat ring or layer material as well as the cylinder head material is present.

10. Method according to at least one of claims 1 to 9, **characterized in that** said seat ring or layer is attached by using a welding method by applying pressure and electrical current to said seat ring or layer, or a laser clad method or a molten injection method.

11. Valve seat structure in a valve opening (2,3) of a cylinder head (1) connectable to a cylinder block of an internal combustion engine, comprising a valve seat material (20) made of a metal different from the metal of said cylinder head (1), said valve seat structure comprising a first tapered surface (T1), a second tapered surface (T2), and a third tapered surface (T3) machined in said cylinder head (1) and said valve seat material (20),
**characterized in that**
another machined tapered surface is provided as a fourth tapered surface (T4) positioned on a side closer to the mating surface with said cylinder block adjacent said third tapered surface (T3) and that, with respect to an axis (C) of the valve opening, the opening angle of said fourth tapered surface (T4) is larger than the opening angles of all remaining tapered surfaces (T1,T2,T3).

12. A valve seat structure according to claim 11, **characterized in that** said second tapered surface is a valve seat surface (T2) and is provided in a position between the first (T1) and third (T3) tapered surfaces where only said valve seat material (20) is present.

13. A valve seat structure according to claim 11 or 12, **characterized in that** with respect to said axis (C) said first tapered surface (T1) has an axial length (A) comprising a first length (A1) only occupying said valve seat material (20) and a second length (A2) only occupying said cylinder head material and that said lengths fulfill the following inequation:$\text{A2/A > 0,5.}$

14. A valve seat structure according to at least one of claims 11 to 13, **characterized in that** with respect to said axis (C) said third tapered surface (T3) has an axial length (A') comprising a third length (A'1) only occupying said valve seat material (20) and a fourth length (A'2) only occupying said cylinder head material and that said lengths fulfill the following inequation:$\text{A'2/A' > 0,5.}$

15. A valve seat structure according to at least one of claims 11 to 13, **characterized in that** said third tapered surface (T3) is provided in a position where only said valve seat material (20) is present.

16. A valve seat structure according to at least one of claims 11 to 15, **characterized in that** said fourth tapered surface (T4) only occupies said cylinder head material.

17. A valve seat structure according to at least one of claims 11 to 15, **characterized in that** said fourth tapered surface (T4) is provided at a position where said valve seat material (20) as well as said cylinder head material is present.

18. A valve seat structure according to at least one of claims 11 to 17, **characterized in that** the opening angles of said first tapered surface (T1) is up to 30°, of said valve seat surface (T2) is from 30° to 90°, of said third tapered surface (T3) is from 90° to 120° and of said fourth tapered surface (T4) is from 120° to 140°.

19. A valve seat structure according to at least one of claims 11 to 18, **characterized in that** the cross-section of said valve seat material (20) is triangularly shaped one corner of which is directed to said cylinder head (1).

20. A valve seat structure according to at least one of claims 11 to 19, **characterized by** an intermediate layer (21) between said valve seat material (20) and said cylinder head (1).

21. A valve seat structure according to claim 20, **characterized in that** said intermediate layer comprises a solid-state diffusion layer (21) extending between the first tapered surface (T1) and the third tapered surface (T3) or fourth tapered surface (T4).

## Patentansprüche

1. Verfahren zur Herstellung einer Ventilsitzstruktur an einer Ventilöffnung eines Zylinderkopfes (1), wobei der Zylinderkopf mit einem Zylinderblock eines Verbrennungsmotors verbindbar ist, das die folgenden Schritte enthält:
Anbringen eines Sitzringes oder einer Schicht, die aus einem vom Zylinderkopfmetall verschiedenen Metall hergestellt ist, und
maschinelle Bearbeitung des Sitzringes oder der Schicht und des Zylinderkopfes an der Ventilöffnung, um drei konische Oberflächen auszubilden, eine erste konische Oberfläche (T1), eine zweite konische Oberfläche (T2) und eine dritte konische Oberfläche (T3) dieser Ventilsitzstruktur,
**dadurch gekennzeichnet**, daß eine weitere vierte konische Oberfläche (T4) in einem ersten Schritt gefertigt wird, bevor die genannten drei konischen Oberflächen (T1, T2, T3) in einem darauffolgenden Schritt gefertigt werden,
wobei die genannte vierte konische Oberfläche (T4) auf einer Seite vorgesehen ist, die näher an der zum Zylinderblock passenden Oberfläche angeordnet ist, wobei relativ zu einer Achse (C) der Ventilöffnung der Öffnungswinkel der vierten konischen Oberfläche (T4) größer ist als die Öffnungswinkel der restlichen konischen Oberflächen (T1, T2, T3).

2. Verfahren gemäß Anspruch 1, **dadurch gekennzeichnet**, daß gleichzeitig mit dem Ausbilden der vierten konischen Oberfläche T4 der Durchmesser der besagten passenden Oberfläche nahe der Ventilöffnung vergrößert wird.

3. Verfahren gemäß wenigstens einem der Ansprüche 1 oder 2, **dadurch gekennzeichnet**, daß die erste konische Oberfläche (T1) und die genannte dritte konische Oberfläche (T3) gleichzeitig durch ein Werkzeug mit jeweiligen Schneideinsätzen ausgeformt werden und sodann die Schneideinsätze zurückgezogen werden und ein Schneideinsatz, der an demselben Schneidwerkzeug befestigt ist, nach vorne bewegt wird, zum Formen der zweiten konischen Oberfläche (T2), die eine Ventilsitzoberfläche (T2) ist.

4. Verfahren nach Anspruch 3, **dadurch gekennzeichnet**, daß die Ventilsitzoberfläche (T2) an einer Stelle vorgesehen ist, an der nur der Sitzring oder das Schichtmaterial gegenwärtig ist.

5. Verfahren nach wenigstens einem der Ansprüche 1 bis 4, **dadurch gekennzeichnet**, daß die erste konische Oberfläche (T1) eine axiale Länge (A) aufweist, die eine erste Länge (A1) enthält, welche den Sitzring oder das Schichtmaterial besetzt und eine zweite Länge (A2) enthält, die nur das Zylinderkopfmaterial besetzt, und daß die Längen die folgende Ungleichung erfüllen: A2 / A > 0,5

6. Verfahren gemäß zumindest einem der Ansprüche 1 bis 5, **dadurch gekennzeichnet**, daß die dritte konische Oberfläche (T3) eine axiale Länge (A') umfaßt, die eine dritte Länge (A'1) enthält, die nur den genannten Sitzring oder das Schichtmaterial besetzt, und eine vierte Länge (A'2), die nur das Zylinderkopfmaterial besetzt, und daß die Längen die folgende Ungleichung erfüllen: A'2 / A' > 0,5.

7. Verfahren nach wenigstens einem der Ansprüche 1 bis 5, **dadurch gekennzeichnet**, daß die konische dritte Oberfläche (T3) an einer Stelle vorgesehen ist, an der nur der Sitzring oder das Schichtmaterial vorhanden ist.

8. Verfahren nach wenigstens einem der Ansprüche 1 bis 7, **dadurch gekennzeichnet**, daß die vierte konische Oberfläche (T4) nur das Zylinderkopfmaterial besetzt.

9. Verfahren nach wenigstens einem der Ansprüche 1 bis 7, **dadurch gekennzeichnet**, daß die vierte konische Oberfläche (T4) an einer Stelle vorgesehen ist, an der sowohl der Sitzring oder das Schichtmaterial als auch das Zylinderkopfmaterial gegenwärtig ist.

10. Verfahren nach wenigstens einem der Ansprüche 1 bis 9, **dadurch gekennzeichnet**, daß der Sitzring oder die Schicht unter Benutzung eines Schweißverfahrens durch Aufbringen von Druck und elektrischem Strom an den Sitzring oder die Schicht befestigt wird, oder daß ein Laserschweißverfahren oder daß ein Einspritzschmelzverfahren Verwendung finden.

11. Ventilsitzanordnung in einer Ventilöffnung (2,3) eines Zylinderkopfes (1), der mit einem Zylinderblock eines Verbrennungsmotores verbindbar ist, und ein Ventilsitzmaterial (20) aufweist, das aus einem Metall, das verschieden von dem Metall des Zylinderkopfes (1) ist, gefertigt ist, wobei die Ventilsitzstruktur eine erste konische Oberfläche (T1), eine zweite konische Oberfläche (T2) und eine dritte konische Oberfläche (T3) aufweist, die in dem Zylinderkopf (1) und dem Ventilsitzmaterial (20) ausgebildet sind, **dadurch gekennzeichnet**, daß eine weitere konische maschinell gefertigte Oberfläche als eine vierte konische Oberfläche (T4) vorgesehen ist, die an einer Seite angeordnet ist, die näher zu dem Zylinderblock passenden Oberfläche angrenzend an die dritte konische Oberfläche (T3) angeordnet ist, und daß relativ zu einer Achse (C) der Ventilöffnung der Öffnungswinkel der vierten konischen Oberfläche (T4) größer ist als der Öffnungswinkel aller verbleibenden konischen Oberflächen (T1, T2, T3).

12. Ventilsitzstruktur gemäß Anspruch 11, **dadurch gekennzeichnet**, daß die zweite konische Oberfläche eine Ventilsitzoberfläche (T2) ist, und daß sie an einer Stelle zwischen der ersten konischen Oberfläche (T1) und der dritten konischen Oberfläche (T3) vorgesehen ist, wo nur das Ventilsitzmaterial (20) vorhanden ist.

13. Ventilsitzanordnung gemäß Anspruch 11 oder 12, **dadurch gekennzeichnet**, daß relativ zu der Achse (C) die erste konische Oberfläche (T1) eine axiale Länge (A) aufweist, welche eine erste Länge (A1) umfaßt, die nur das Ventilsitzmaterial (20) besetzt und eine zweite Länge (A2), die nur das Zylinderkopfmaterial besetzt, und daß die Längen die folgende Ungleichung erfüllen: A2 / A > 0,5.

14. Ventilsitzstruktur gemäß wenigstens einem der Ansprüche 11 bis 13, **dadurch gekennzeichnet**, daß relativ zu der Achse (C) die dritte konische Oberfläche (T3) eine axiale Länge (A') aufweist, die eine dritte Länge (A'1) umfaßt, welche nur das Ventilsitzmaterial (20) besetzt und eine vierte Länge (A'2), die nur das Zylinderkopfmaterial besetzt, und daß die besagten Längen die folgende Ungleichung erfüllen: A'2 / A' > 0,5.

15. Ventilsitzstruktur gemäß wenigstens einem der Ansprüche 11 bis 13, **dadurch gekennzeichnet**, daß die dritte konische Oberfläche (T3) an einer Stelle vorgesehen ist, an der nur das Ventilsitzmaterial (20) gegenwärtig ist.

16. Ventilsitzstruktur gemäß wenigstens einem der Ansprüche 11 bis 15, **dadurch gekennzeichnet**, daß die vierte konische Oberfläche (T4) nur das Zylinderkopfmaterial besetzt.

17. Ventilsitzstruktur gemäß wenigstens einem der Ansprüche 11 bis 15, **dadurch gekennzeichnet**, daß die vierte konische Oberfläche (T4) an einer Stelle vorgesehen ist, an der sowohl das Ventilsitzmaterial (20) wie auch das Zylinderkopfmaterial vorhanden sind.

18. Ventilsitzstruktur gemäß wenigstens einem der Ansprüche 11 bis 17, **dadurch gekennzeichnet**, daß die Öffnungswinkel der ersten konischen Oberfläche (T1) bis zu 30°, der Ventilsitzoberfläche (T2) zwischen 30° und 90°, der dritten konischen Oberfläche (T3) zwischen 90° und 120°, und der vierten konischen Oberfläche von 120° bis 140° betragen.

19. Ventilsitzanordnung gemäß wenigstens einem der Ansprüche 11 bis 18, **dadurch gekennzeichnet**, daß der Querschnitt des Ventilsitzmateriales (20) dreieckig ausgebildet ist, wobei eine Ecke davon zum Zylinderkopf (1) hin gerichtet ist.

20. Ventilsitzanordnung gemäß wenigstens einem der Ansprüche 1 bis 19, **gekennzeichnet** durch eine Zwischenschicht (21) zwischen dem Ventilsitzmaterial (20) und dem Zylinderkopf (1).

21. Ventilsitzanordnung gemäß Anspruch 20, **dadurch gekennzeichnet**, daß die Zwischenschicht eine Festzustands- Diffusionsschicht (21) enthält, die sich zwischen der ersten konischen Oberfläche (T1) und der dritten konischen Oberfläche (T3) oder der vierten konischen Oberfläche (T4) erstreckt.

## Revendications

1. Procédé de fabrication d'une structure de siège de soupape à une ouverture de soupape d'une culasse (1), ladite culasse étant susceptible être reliée à un bloc-cylindres d'un moteur à combustion interne, comprenant les étapes consistant à,
fixer à l'ouverture de soupape un anneau ou un revêtement de siège, constitué d'un métal qui est différent du métal de la culasse, et
usiner ledit anneau ou couche de siège et la culasse à ladite ouverture de soupape pour former trois surfaces coniques, une première surface conique (T1), une deuxième surface conique (T2) et une troisième surface conique (T3) de ladite structure de siège de soupape,
caractérisé en ce qu'
une autre quatrième surface conique (T4) est usinée lors d'une première étape avant l'usinage desdites trois surfaces coniques (T1, T2, T3) à une étape subséquente, ladite quatrième étape conique (T4) étant prévue sur un côté plus près de la surface d'ajustement avec le bloc cylindre, tandis que par rapport à un axe (C) de l'ouverture de soupape l'angle d'ouverture de la quatrième surface conique (T4) est supérieur aux angles d'ouverture des surfaces coniques (T1, T2, T3) restantes.

2. Procédé selon la revendication 1, caractérisé en ce que simultanément au fait de prévoir la quatrième surface conique (T4) le diamètre de ladite surface d'ajustement adjacente à ladite ouverture de soupape est augmenté.

3. Procédé selon au moins l'une des revendications 1 à 2, caractérisé en ce que ladite première surface conique (T1) et ladite troisième surface conique (T3) sont façonnées simultanément par un outil, ayant des lames de coupe respectives, puis lesdites lames de coupe étant rétractées et une lame de coupe qui est fixée au même outil est avancée pour façonner ladite deuxième surface conique (T2) qui est une surface de siège de soupape (T2).

4. Procédé selon la revendication 3, caractérisé en ce que ladite surface de siège de soupape (T2) est prévue dans une position dans laquelle seul ledit matériau d'anneau ou de revêtement de siège est présent.

5. Procédé selon au moins l'une des revendications 1 à 4, caractérisé en ce que ladite première surface conique (T1) a une longueur axiale (A) comprenant une première longueur (A1) occupant seulement ledit matériau d'anneau ou de revêtement de siège et une deuxième longueur (A2) occupant seulement ledit matériau de culasse et en ce que lesdites longueurs satisfont à l'inéquation ci-après :$\text{A2/A > 0,5.}$

6. Procédé selon au moins l'une des revendications 1 à 5, caractérisé en ce que ladite troisième surface conique (T3) a une longueur axiale (A') comprenant une troisième longueur (A'1) occupant seulement ledit matériau d'anneau ou de revêtement de siège et une quatrième longueur (A'2) occupant seulement ledit matériau de culasse et en ce que lesdites longueurs satisfont à l'inéquation ci-après :$\text{A'2/A' > 0,5.}$

7. Procédé selon au moins l'une des revendications 1 à 5, caractérisé en ce que ladite troisième surface conique (T3) est prévue dans une position dans laquelle seul ledit matériau d'anneau ou de revêtement de siège est présent.

8. Procédé selon au moins l'une des revendications 1 à 7, caractérisé en ce que ladite quatrième surface conique (T4) occupe seulement ledit matériau de culasse.

9. Procédé selon au moins l'une des revendications 1 à 7, caractérisé en ce que ladite quatrième surface conique (T4) est prévue en une position à laquelle le matériau d'anneau ou de couche de siège ainsi que le matériau de la culasse est présent.

10. Procédé selon au moins l'une des revendications 1 à 9, caractérisé en ce que ledit anneau ou couche de siège est fixé en utilisant un procédé de soudage en appliquant une pression et du courant électrique audit anneau couche de siège, ou un procédé de plaquage au laser ou bien un procédé d'injection de produit fondu.

11. Structure de siège de soupape dans une ouverture de soupape (2, 3) d'une culasse (1) pouvant être liée à un bloc-cylindres d'un moteur à combustion interne, comprenant un matériau de siège de soupape (20) constitué d'un métal différent du métal de ladite culasse (1), ladite structure de siège de soupape comprenant une première surface conique (T1), une deuxième surface conique (T2) et une troisième surface conique (T3) qui sont usinées dans ladite culasse (1) et ledit matériau de siège de soupape (20),
caractérisée en ce que
une autre surface conique usinée est prévue à titre de quatrième surface conique (T4) placée sur un côté plus près de la surface d'ajustement avec ledit bloc cylindre adjacent à ladite troisième surface conique (T3) et en ce que par rapport à un axe (C) de l'ouverture de soupape, l'angle d'ouverture de ladite quatrième surface conique (T4) est supérieur aux angles d'ouverture de la totalité des surfaces coniques (T1, T2, T3) restantes.

12. Une structure de siège de soupape selon la revendication 11, caractérisée en ce que ladite deuxième surface conique est une surface de siège de soupape (T2) prévue en une position située entre les première (T1) et troisième (T3) surfaces coniques là où est seulement présent ledit matériau de siège de soupape (20).

13. Une structure de siège de soupape selon la revendication 11 ou 12, caractérisée en ce que par rapport audit axe (C), ladite première surface conique (T1) a une longueur axiale (A) comprenant une première longueur (A1) occupant seulement ledit matériau de siège de soupape (20) et une deuxième longueur (A2) occupant seulement ledit matériau de culasse et en ce que lesdites longueurs satisfont à l'inéquation ci-après :$\text{A2/A > 0,5.}$

14. Une structure de siège de soupape selon au moins l'une des revendications 11 à 13, caractérisée en ce que eu égard audit axe (C) ladite troisième surface conique (T3) a une longueur axiale (A') comprenant une troisième longueur (A'1) occupant seulement ledit matériau de siège de soupape (20) et une quatrième longueur (A'2) occupant seulement ledit matériau de culasse et en ce que lesdites longueurs satisfont à l'inéquation ci-après :$\text{A'2/A' > 0,5.}$

15. Une structure de siège de soupape selon au moins l'une des revendications 11 à 13, caractérisée en ce que ladite troisième surface conique (T3) est prévue dans une position dans laquelle seul ledit matériau de siège de soupape (20) est présent.

16. Une structure de siège de soupape selon au moins l'une des revendications 11 à 15, caractérisée en ce que ladite quatrième surface conique (T4) occupe seulement le matériau de culasse.

17. Une structure de siège de soupape selon au moins l'une des revendications 11 à 15, caractérisée en ce que ladite quatrième surface conique (T4) est prévue en une position dans laquelle ledit matériau de siège de soupape (20) ainsi que ledit matériau de culasse est présent.

18. Une structure de siège de soupape selon au moins l'une des revendications 11 à 17, caractérisée en ce que les angles d'ouverture de ladite première surface conique (T1) vont jusqu'à 30°, de ladite surface de soupape (T2) vont de 30° à 90°, de ladite troisième surface conique (T3) vont de 90° à 120° et de ladite quatrième surface conique (T4) vont de 120° à 140°.

19. Une structure de siège de soupape selon au moins l'une des revendications 11 à 18, caractérisée en ce que la section transversale dudit matériau de siège de soupape (20) est à forme triangulaire, donc un angle est orienté vers ladite culasse (1).

20. Une structure de siège de soupape selon au moins l'une des revendications 11 à 19, caractérisée par une couche intermédiaire (21) entre ledit matériau de siège de soupape (20) et ladite culasse (1).

21. Une structure de siège de soupape selon la revendication 20, caractérisée en ce que ladite couche intermédiaire est constituée d'une couche à diffusion à l'état solide (21) qui s'étend entre la première surface conique (T1) et la troisième surface conique (T3) ou la quatrième surface conique (T4).
